# EUROPÄISCHE PATENTANMELDUNG

(11) **EP 1 857 784 A2**
(43) Veröffentlichungstag der Anmeldung: **21.11.2007**
(21) Anmeldenummer: 07108382.8
(22) Anmeldetag: 16.05.2007
(51) Int. Cl.: G01F 1/58, G01F 15/14

(54) **Messaufnehmer eines magnetisch induktiven Durchflussmessgeräts**

(30) Priorität: 19.05.2006 DE 102006023915
(71) Anmelder: Endress + Hauser Flowtec AG, 4153 Reinach BL 1 (CH)
(72) Erfinder: Magliocca, Antonio, 4055, Basel (CH)
(74) Vertreter: Andres, Angelika Maria

(57) **Zusammenfassung**

Es ist ein vor eindringender Feuchtigkeit geschützter Messaufnehmer (11) eines magnetisch induktiven Durchflussmessgeräts beschrieben, mit einem Messrohr (1) aus einem Kunststoff, dessen Innenraum im Messbetrieb vom Medium durchströmt wird, einer am Messrohr (1) montierten Vorrichtung (3) zur Erzeugung eines das Messohr (1) durchsetzenden Magnetfelds, in das Messrohr (1) eingesetzten Elektroden (31), über die im Messbetrieb eine in das Medium induzierte Spannung abgreifbar ist, und einem Messaufnehmergehäuse (33) aus einem Kunststoff, das einen hermetisch dichten abgeschlossenen Innenraum (35) aufweist, in den das Messrohr (1) mittels hermetisch dichter Verbindungen derart eingesetzt ist, dass der Innenraum (35) des Messrohrs (1) einlass- und auslassseitig zugänglich ist, dass der Innenraum (35) des Messaufnehmergehäuses (33) gegenüber dem Innenraum des Messrohrs (1) und der Umgebung des Messaufnehmers hermetisch dicht verschlossen ist, und sich die Vorrichtung (3) zur Erzeugung des Magnetfelds, deren Anschlussleitungen (37), sowie Anschlussleitungen (39) für die Elektroden (31) im Innenraum (35) befinden.

## Beschreibung

Die Erfindung betrifft einen Messaufnehmer eines magnetisch induktiven Durchflussmessgeräts.

Durchflussmessgeräte werden in der industriellen Messtechnik zur Messung von Volumenströmen eingesetzt.

Ein heute gängiges Messverfahren beruht auf dem magneto-hydrodynamischen Prinzip und wird in magnetisch induktiven Durchflussmessaufnehmern eingesetzt. Dabei wird ein zumindest in geringem Umfang elektrisch leitfähiges Medium, dessen Volumenstrom gemessen werden soll, durch ein Messrohr geleitet, das im wesentlichen senkrecht zur Rohrachse von einem Magnetfeld durchsetzt ist. Senkrecht zum Magnetfeld bewegte Ladungsträger induzieren senkrecht zu deren Durchflussrichtung eine Spannung, die über entsprechend angeordnete Messelektroden abgreifbar ist. Die Messelektroden sind hierzu mit dem Medium entweder kapazitiv oder galvanisch gekoppelt. Die induzierte Spannung ist proportional zu einer über einen Querschnitt des Messrohres gemittelten Strömungsgeschwindigkeit des Mediums und damit proportional zum Volumenstrom.

Handelsübliche magnetisch induktive Messaufnehmer weisen regelmäßig ein mit dem Messrohr verbundenes Messaufnehmergehäuse auf, das zumindest einen Teil des Messrohres umgibt, und in dem üblicher Weise die am Messrohr montierte Vorrichtung zur Erzeugung des das Messohr durchsetzenden Magnetfelds, deren Anschlussleitungen, sowie Anschlussleitungen für die Elektroden angeordnet sind. Die einzelnen Komponenten bestehen regelmäßig aus unterschiedlichen Materialien und sind in der Regel unter Zwischenfügung entsprechender Dichtungen miteinander verbunden.

Magnetisch induktive Durchflussmessgeräte werden in industriellen Anwendungen häufig sehr großen Temperaturschwankungen ausgesetzt. Da herkömmliche Dichtungen in der Regel druckdicht aber nicht gasdicht schließen, kann es durch Temperaturwechsel dazu kommen, dass sehr feuchte Luft aus der Umgebung in das Messaufnehmergehäuse eindringt oder sogar eingesaugt wird, und sich darin enthaltene Feuchtigkeit im Gehäuse niederschlägt. Das Kondensat kann dann nicht mehr entweichen. Man spricht in diesem Zusammenhang auch von einem so genannten Pumpeffekt. Feuchtigkeit im Messaufnehmergehäuse kann zu einer erheblichen Beeinträchtigung der Funktionalität des Messaufnehmers führen.

Ein ähnliches Problem tritt in Verbindung mit metallischen Messrohren auf, die innen mit einem elektrisch nicht leitenden Isoliermaterial, dem so genannten Liner, beschichtet ist. Hier kann es zu einer Hinterwanderung des Liners kommen, bei der Luft oder Gas aus der Umgebung und/oder Medium zwischen dem Liner und dem Messrohr eindringt. Dies kann ebenfalls die Funktionalität des Messaufnehmers beeinträchtigen.

Es ist eine Aufgabe der Erfindung einen vor eindringender Feuchtigkeit geschützten magnetisch induktiven Durchflussmessaufnehmer anzugeben.

Hierzu besteht die Erfindung in einem Messaufnehmer eines magnetisch induktiven Durchflussmessgeräts zum Messen eines Durchflusses eines Mediums durch ein bestehendes Rohrleitungssystem, mit

- einem Messrohr aus einem Kunststoff, dessen Innenraum im Messbetrieb

vom Medium durchströmt wird,

- einer am Messrohr montierten Vorrichtung zur Erzeugung eines das

Messohr durchsetzenden Magnetfelds,

- in das Messrohr eingesetzten Elektroden, über die im Messbetrieb eine in

das Medium induzierte Spannung abgreifbar ist, und

- einem Messaufnehmergehäuse aus einem Kunststoff,

-- das einen hermetisch dichten abgeschlossenen Innenraum aufweist,

-- in den das Messrohr mittels hermetisch dichter Verbindungen

derart eingesetzt ist,

- dass der Innenraum des Messrohrs einlass- und auslassseitig zugänglich

ist,

--- dass der Innenraum des Messaufnehmergehäuses gegenüber dem

Innenraum des Messrohrs und der Umgebung des Messaufnehmers

hermetisch dicht verschlossen ist, und

--- sich die Vorrichtung zur Erzeugung des Magnetfelds, deren

Anschlussleitungen, sowie Anschlussleitungen für die Elektroden

im Innenraum befinden.

Gemäß einer Ausgestaltung sind die hermetisch dichten Verbindungen Kunststoffschweißungen oder Klebungen.

Gemäß einer Weiterbildung grenzt an das Messaufnehmergehäuse ein Anschlussraum, dessen Innenraum vollständig vom Innenraum des

Messaufnehmergehäuses getrennt ist, und in einer den Innenraum des Messaufnehmergehäuses vom Anschlussraum trennenden Außenwand des Messaufnehmergehäuses sind hermetisch dichte Durchführungen vorgesehen, über die die Anschlussleitungen der Vorrichtung zur Erzeugung des Magnetfelds und der Elektroden in den Anschlussraum geführt sind.

Gemäß einer Weiterbildung ist der Anschlussraum durch einen kappenförmigen Aufsatz aus einem Kunststoff gebildet, der hermetisch dicht mit einer an das Messaufnehmergehäuse angeformten, die Durchführungen umgebenden Basis verbunden ist. Vorzugsweise ist der Anschlussraum mit einer Vergussmasse ausgefüllt.

Gemäß einer weiteren Ausgestaltung ist am Anschlussraum ein Steckverbinder angeordnet, über den die in den Anschlussraum hinein geführten Anschlussleitungen von außen kontaktierbar sind.

Gemäß einer Weiterbildung weist das Messaufnehmergehäuse einen Hohlzylinder auf, an den auf einander gegenüberliegenden Seiten ein Einlass und ein Auslass für das Medium angeformt ist. Das Messrohr ist im Hohlzylinder derart angeordnet, dass es senkrecht zur einer Längsachse des Hohlzylinders verläuft und den Einlass mit dem Auslass verbindet. Jedes Ende des Messrohrs ist mittels einer hermetisch dichten Verbindung, insb. einer Kunststoffschweißung oder einer Klebung, hermetisch dicht mit dem Hohlzylinder verbunden, und der Innenraum des Messaufnehmergehäuses ist durch die hermetisch dichte Verbindung gegenüber den Innenräumen des Messrohrs, des Einlasses und des Auslasses abgeschlossen.

Gemäß einer Ausgestaltung weist das Messaufnehmergehäuse zwei im wesentlichen kreisscheibenförmige Deckel auf, die endseitig auf zwei einander gegenüberliegende ringförmige Stirnflächen des Hohlzylinders mittels hermetisch dichter Verbindungen, insb. Kunststoff-Schweißungen oder Klebungen, aufgebracht sind.

Ein Vorteil der Erfindung besteht darin, dass der Innenraum des Messaufnehmergehäuses vollständig hermetisch dicht gegenüber dem Messrohr und gegenüber der Umgebung abgeschlossen ist. Hierdurch wird sichergestellt, dass kein Gasaustausch mit der Umgebung stattfinden kann. Entsprechend ist der Innenraum vor eindringender Feuchtigkeit geschützt.

Die Erfindung und weitere Vorteile werden nun anhand der Figuren der Zeichnung, in denen ein Ausführungsbeispiel dargestellt ist, näher erläutert; gleiche Teile sind in den Figuren mit gleichen Bezugszeichen versehen.

Fig. 1 zeigt einen erfindungsgemäßen magnetisch induktiven

Durchflussmessaufnehmer;

Fig. 2 zeigt das Messrohr von Fig. 1 im Schnitt;

Fig. 3 zeigt eine Ansicht des Feldleitelements von Fig. 1;

Fig. 4 zeigt eine Schnittzeichnung des Messrohres 1 in der Ebene der

Elektroden 31.

Fig. 5 zeigt eine Ansicht des Durchflussmessaufnehmers von Fig. 1;

Fig. 6 zeigt einen Schnitt des in Fig. 1 dargestellten Durchflussmessaufnehmer

mit einlassseitig und auslassseitig an das Messrohr angeformten

Prozessanschlüssen; und

Fig. 7 zeigt eine Ansicht des Messaufnehmers von Fig. 6.

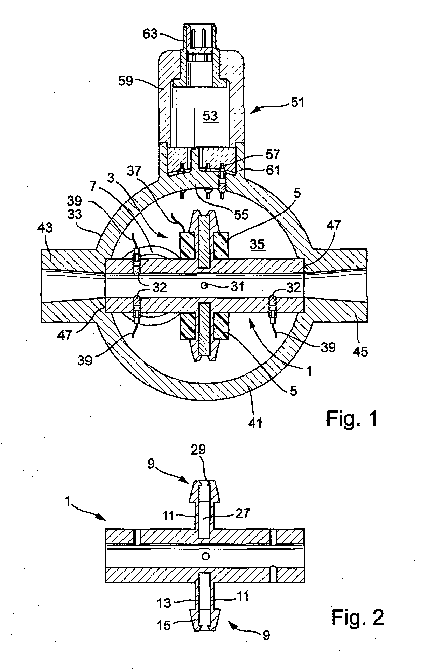

Fig. 1 zeigt ein Ausführungsbeispiel eines erfindungsgemäßen Messaufnehmer eines magnetisch induktiven Durchflussmessgeräts zum Messen eines Durchflusses eines Mediums durch ein bestehendes Rohrleitungssystem. Der Messaufnehmer weist ein in Fig. 2 im Detail dargestelltes Messrohr 1 auf, dessen Innenraum im Messbetrieb vom Medium durchströmt wird. Hierzu wird das Messrohr 1 über, in Fig. 1 nicht dargestellte, Prozessanschlüsse in das bestehende Rohrleitungssystem eingesetzt. Erfindungsgemäß besteht das Messrohr 1 vollständig aus einem Kunststoff. Vorzugsweise werden Thermoplaste wie z.B. Polyetheretherketon (PEEK), Polyvinylidenfluorid (PVDF), Polyethylen (PE) oder Polyamid (PA) verwendet.

Kunststoffe sind Isolatoren. Dies bietet unter anderem den Vorteil, dass keine isolierende Auskleidung, wie der eingangs genannte Liner, des Messrohres 1 erforderlich ist. Entsprechend kann auch kein Medium und kein Gas zwischen Messrohr und Auskleidung eindringen.

Weiter umfasst der Messaufnehmer eine am Messrohr 1 montierte Vorrichtung 3 zur Erzeugung eines das Messohr 1 zumindest teilweise durchsetzenden Magnetfelds. Die Vorrichtung 3 umfasst in dem dargestellten Ausführungsbeispiel zwei einander diametral gegenüberliegend am Messrohr 1 befestigte Spulen 5 und ein einstückiges Feldleitelement 7 aus einem magnetisch leitfähigen Material, das der Führung des Magnetfeldes außerhalb des Messrohres 1 dient.

Zur Befestigung der Spulen 5 sind zwei einander gegenüberliegend radial nach außen weisende Halterungen 9 vorgesehen. Jede Halterung 9 umfasst zwei parallel zueinander angeordnete unmittelbar an das Messrohr 1 angeformte Rastelemente 11, die einen geraden Abschnitt 13 mit recheckigem Querschnitt aufweisen, an den endseitig ein sich in messrohr-abgewandter Richtung verjüngender Absatz 15 anschließt. Die Spulen 5 sind im wesentlichen hohlzylindrisch und werden auf die beiden Rastelemente 11 aufgesteckt. Im montierten Zustand umgeben die Spulen 5 die geraden Abschnitte 13 koaxial und werden durch die daran angrenzenden Absätze 15 in ihrer Position fixiert.

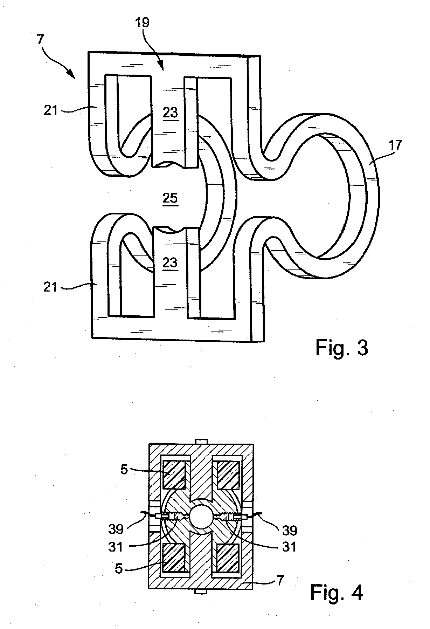

Fig. 3 zeigt eine Ansicht des Feldleitelements 7. Es umfasst zwei miteinander verbundene parallel zu einander zu beiden Seiten des Messrohrs 1 verlaufende Bügel 17. Die Verbindung der beiden Bügel 17 erfolgt über eine in einer Ebene verlaufende Basis 19, die zwei einander gegenüberliegend in der Ebene angeordnete E-förmige Segmente 21 aufweist. Die äußeren Querbalken eines jeden E-förmigen Segments 21 sind jeweils durch einen der Bügel 17 mit dem gegenüberliegenden Querbalken des anderen E-förmigen Segments 21 verbunden. Zwischen den beiden mittleren Querbalken 23 besteht ein Freiraum 25, durch den das Messrohrs 1 hindurch geführt wird. Das Feldleitelement 7 besteht aus einem federelastischen Material und wird in die Halterungen 9 eingesteckt. Dabei wird das Feldleitelement 7 auf das Messrohr 1 geschoben und es werden die beiden mittleren Querbalken 23 in einen zwischen den beiden Rastelelementen 11 der jeweiligen Halterung 9 bestehenden Spalt 27 eingesetzt. Zur Fixierung des Feldleitelements 7 ist zusätzlich an jedem Rastelement 11 endseitig eine in den Spalt 27 hinein weisende Rastnase 29 vorgesehen, die im montierten Zustand jeweils hinter dem Stamm des jeweiligen E-förmigen Elements 21 einrasten.

In das Messrohr 1 sind Elektroden 31 in entsprechende Bohrungen eingesetzt. Hierzu wird auf die EP 0 892 252 A1 verwiesen. Dort ist ein flüssigkeitsdichter Einbau von Elektroden beschrieben, der beispielsweise dadurch erzielt wird, dass die Elektroden mit hintereinander liegenden kegelstumpf-förmigen Abschnitten versehen sind, in denen sich das Material des Messrohrs 1 verkrallt. Die in das Messrohr 1 eingesetzten Elektroden 31, dienen dazu im Messbetrieb eine in das Medium induzierte Spannung abzugreifen. In dem dargestellten Ausführungsbeispiel sind zwei Elektroden 31 vorgesehen, die einander gegenüberliegend derart in das Messrohr 1 eingesetzt sind, dass eine zwischen den Elektroden 31 gedachte Verbindungslinie senkrecht zu einer zwischen den beiden Spulen 5 gedachten Verbindungslinie und damit senkrecht zum Magnetfeld verläuft. Fig. 4 zeigt eine Schnittzeichnung des Messrohres 1 in der Ebene der Elektroden 31.

Zusätzlich können weitere auf identische Weise in das Messrohr 1 eingesetzte Elektroden 32 vorgesehen sein, die Beispielsweise dazu dienen, einem Potentialausgleich zu bewirken.

Der Messaufnehmer weist ein Messaufnehmergehäuse 33 aus einem Kunststoff auf, das einen hermetisch dichten abgeschlossenen Innenraum 35 aufweist. Bevorzugt wird hier der gleiche Werkstoff verwendet, der auch für das Messrohr 1 eingesetzt wird. Das Messrohr 1 ist ganz oder teilweise mittels einer hermetisch dichten Verbindung derart in das Messaufnehmergehäuse 33 eingesetzt, dass der Innenraum des Messrohrs 1 einlass- und auslassseitig zugänglich ist, und der Innenraum 35 des Messaufnehmergehäuses 33 gegenüber dem Innenraum des Messrohrs und der Umgebung des Messaufnehmers hermetisch dicht verschlossen ist. Dies ist insbesondere deshalb möglich, weil die hermetisch dicht miteinander zu verbindenden Teile, das Messaufnehmergehäuse 33 und das Messrohr 1 beide aus Kunststoff bestehen. Die hermetisch dichten Verbindungen zwischen den betroffenen zu verbindenden Segmenten des Messaufnehmergehäuses 33 und dem Messrohr 1 werden vorzugsweise durch Kunststoff-Schweißungen oder durch Klebungen hergestellt. In dem Innenraum 35 des Messaufnehmergehäuses 33 befinden sich die Vorrichtung 3 zur Erzeugung des Magnetfelds, deren Anschlussleitungen 37, sowie Anschlussleitungen 39 für die Elektroden 31, 32. Selbstverständlich können in dem Innenraum 35 weitere elektrische und/oder mechanische Komponenten, wie z.B. eine Vorortelektronik, enthalten sein.

Das in Fig. 1 dargestellte Messaufnehmergehäuse 33 weist einen Hohlzylinder 41 auf, an den auf einander gegenüberliegenden Seiten ein Einlass 43 und ein Auslass 45 für das Medium angeformt sind. Einlass 43 und Auslass 45 sind jeweils durch ein an den Hohlzylinder 41 angeformtes im Innenraum des Hohlzylinders 41 mündendes Rohrsegment gebildet. Das Messrohr 1 befindet sich in diesem Ausführungsbeispiel vollständig im Messaufnehmergehäuse 33 und ist im Hohlzylinder 41 derart angeordnet, dass es senkrecht zur einer Längsachse des Hohlzylinders verläuft und den Einlass 43 mit dem Auslass 45 verbindet. Hierzu ist auf der Innenseite des Hohlzylinders 41 eine die Mündung des Einlasses 43 und eine weitere die Mündung des Auslasses 45 koaxial eng umschließende Ausnehmung 47 vorgesehen, in die die jeweiligen Enden des Messrohrs 1 derart eingesetzt sind, dass eine Innere Mantelfläche des Messrohres 1 bündig mit den daran angrenzenden inneren Mantelflächen des Einlasses 43 und des Auslasses 45 abschließt. Beide Enden des Messrohrs 1 sind in die jeweiligen Ausnehmungen 47 mittels einer hermetisch dichten Verbindung eingesetzt, z.B. eingeschweißt oder eingeklebt. Durch dies hermetisch dichten Verbindungen ist der Innenraum 35 des Messaufnehmergehäuses 33 hermetisch dicht gegenüber den Innenräumen des Messrohrs 1, des Einlasses 43 und des Auslasses 43 abgeschlossen.

Hergestellt wird diese Verbindung beispielsweise, indem das Messrohr 1 vollständig mit den Elektroden 31, 32, den Spulen 5 und dem Feldleitsystem 7 bestückt wird. Es wird der Hohlzylinder 41 senkrecht zur Durchflussrichtung zusammengedrückt. Dies führt zu einer Ausdehnung des Hohlzylinders 41 in Durchflussrichtung. Messrohr 1 und Hohlzylinder 41 werden beispielsweise angewärmt und es wird dass Messrohr 1 in den zusammengedrückten Hohlzylinder 41 eingesetzt, und dort eingeschweißt oder eingeklebt.

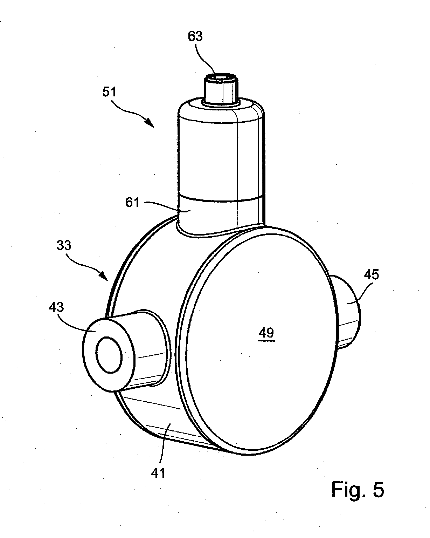

Neben dem Hohlzylinder 41 umfasst das Messaufnehmergehäuse 7 zwei im wesentlichen kreisscheibenförmige Deckel 49, die mittels einer hermetisch dichten Verbindung, insb. einer Kunststoff-Schweißung oder einer Klebung, auf zwei einander gegenüberliegende ringförmige Stirnflächen des Hohlzylinders 41 aufgebracht sind. Fig. 5 zeigt eine Ansicht des Messaufnehmergehäuses 33.

Der Innenraum 35 des Messaufnehmergehäuses 33 ist erfindungsgemäß vollständig in sich geschlossen und nach außen durch das hermetisch dicht darin eingesetzte Messrohr 1 abgeschlossen. Es besteht keine gasdurchlässige Verbindung zur Umgebung. Insbesondere sind keine Dichtungen erforderlich. Entsprechend findet kein Gasaustausch mit der Umgebung statt. Feuchte Luft kann auch bei extremen Temperaturschwankungen nicht mehr in den Innenraum 35 eindringen bzw. eingesaugt werden. Entsprechend ist der Innenraum 35 vollständig gegenüber eindringender Feuchtigkeit, die im Gehäuse kondensieren könnte geschützt.

An das Messaufnehmergehäuse 41 grenzt ein Anschlussraum 51 an, dessen Innenraum 53 durch eine Außenwand 55 des Messaufnehmergehäuses 41 vollständig vom Innenraum 35 des Messaufnehmergehäuses 41 getrennt ist. In dieser den Innenraum 35 des Messaufnehmergehäuses 41 vom Anschlussraum 51 trennenden Außenwand 55 des Messaufnehmergehäuses sind hermetisch dichte Durchführungen 57 vorgesehen, über die die Anschlussleitungen 37 der Vorrichtung 3 zur Erzeugung des Magnetfelds und Anschlussleitungen 39 der Elektroden 31, 32 in den Anschlussraum 51 geführt sind.

Die Durchführungen 57 sind vorzugsweise genau wie die Elektroden 31, 32 mit hintereinander liegenden kegelstumpf-förmigen Abschnitten ausgestattet, in denen sich das Material der Außenwand 55 verkrallt.

Der Anschlussraum 51 wird vorzugsweise durch einen kappenförmigen Aufsatz 59 aus einem Kunststoff gebildet, der hermetisch dicht mit einer an das Messaufnehmergehäuse 41 angeformten, die Durchführungen 57 umgebenden Basis 61 verbunden ist. Auch hier wird vorzugsweise der gleiche Werkstoff verwendet, der auch für das Messrohr 1 und das Messaufnehmergehäuse 41 eingesetzt wird. Die hermetisch dichte Verbindung ist vorzugsweise eine Kunststoff-Schweißung oder eine Klebung.

Die Anschlussleitungen 37, 39 werden über die Durchführungen 57 in den Anschlussraum 51 hinein geführt und dort an einen am Anschlussraum 51 angeordneten Steckverbinder 63 angeschlossen, über den sie von außen kontaktierbar sind. Der im Anschlussraum 53 verbleibende Hohlraum ist vorzugsweise mit einer Vergussmasse ausgefüllt. Auf diese Weise ist sichergestellt, dass auch der Anschlussraum 53 vor eindringender Feuchtigkeit geschützt ist.

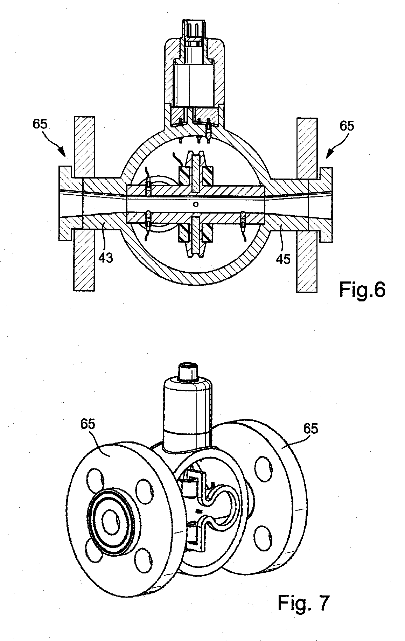

Der in Fig. 1 dargestellte Messaufnehmer kann mit einer Vielzahl verschiedener Prozessanschlüsse ausgestattet sein. Fig. 6 zeigt einen Schnitt und Fig. 7 eine Ansicht des Messaufnehmers von Fig. 1 bei dem an den Einlass 43 und an den Auslass 45 Kunststoff-Flansche 65 angeformt sind. Andere Arten von Prozessanschlüssen sind ebenfalls einsetzbar und können unmittelbar an Einlass 43 und Auslass 45 angeformt werden.

Alternativ hierzu ist es auch möglich, die Prozessanschlüsse unmittelbar an das Messrohr anzuformen. In dem Fall ist ein Messaufnehmergehäuse einzusetzen, das einen zwischen den Prozessanschlüssen befindlichen Abschnitt des Messrohrs hermetisch dicht umschließt. Diese Gehäuse kann beispielsweise zwei Gehäusehälften aufweisen, die miteinander hermetisch dicht verbunden, insb. verschweißt oder verklebt sind. Das Messrohr wird in dem Fall durch das Gehäuse hindurch und ist dort, wo es in das Gehäuse ein- bzw. austritt hermetisch dicht mit dem Gehäuse zu verbinden, z.B. zu verschweißen oder zu verkleben. Auch hierdurch ist ein hermetisch dicht abgeschlossener Innenraum des Messaufnehmergehäuses erzielbar.

## Patentansprüche

1. Messaufnehmer eines magnetisch induktiven Durchflussmessgeräts zum Messen eines Durchflusses eines Mediums durch ein bestehendes Rohrleitungssystem, mit - einem Messrohr (1) aus einem Kunststoff, dessen Innenraum im Messbetrieb vom Medium durchströmt wird, - einer am Messrohr (1) montierten Vorrichtung (3) zur Erzeugung eines das Messohr (1) durchsetzenden Magnetfelds, - in das Messrohr (1) eingesetzten Elektroden (31), über die im Messbetrieb eine in das Medium induzierte Spannung abgreifbar ist, und - einem Messaufnehmergehäuse (33) aus einem Kunststoff, -- das einen hermetisch dichten abgeschlossenen Innenraum (35) aufweist,-in den das Messrohr (1) mittels hermetisch dichter Verbindungen derart eingesetzt ist, --- dass der Innenraum (35) des Messrohrs (1) einlass- und auslassseitig zugänglich ist, --- dass der Innenraum (35) des Messaufnehmergehäuses (33) gegenüber dem Innenraum des Messrohrs (1) und der Umgebung des Messaufnehmers hermetisch dicht verschlossen ist, und --- sich die Vorrichtung (3) zur Erzeugung des Magnetfelds, deren Anschlussleitungen (37), sowie Anschlussleitungen (39) für die Elektroden (31) im Innenraum (35) befinden.

2. Messaufnehmer nach Anspruch 1, bei dem die hermetisch dichten Verbindungen Kunststoffschweißungen oder Klebungen sind.

3. Messaufnehmer nach Anspruch 1, bei dem - an das Messaufnehmergehäuse (33) ein Anschlussraum (51) angrenzt, -- dessen Innenraum (53) vollständig vom Innenraum (35) des Messaufnehmergehäuses (33) getrennt ist, und - in einer den Innenraum (35) des Messaufnehmergehäuses (33) vom Anschlussraum (51) trennenden Außenwand (55) des Messaufnehmergehäuses (33) hermetisch dichte Durchführungen (57) vorgesehen sind, über die die Anschlussleitungen (37, 39) der Vorrichtung (3) zur Erzeugung des Magnetfelds und der Elektroden (31) in den Anschlussraum (51) geführt sind.

4. Messaufnehmer nach Anspruch 1, bei dem - der Anschlussraum (51) durch einen kappenförmigen Aufsatz (59) aus einem Kunststoff gebildet ist, -- der hermetisch dicht mit einer an das Messaufnehmergehäuse (33) angeformten, die Durchführungen (57) umgebenden Basis (61) verbunden ist.

5. Messaufnehmer nach Anspruch 3 oder 4, bei dem der Anschlussraum (51) mit einer Vergussmasse ausgefüllt ist.

6. Messaufnehmer nach Anspruch 3, bei dem am Anschlussraum (51) ein Steckverbinder (63) angeordnet ist, über den die in den Anschlussraum (51) hinein geführten Anschlussleitungen (37, 39) von außen kontaktierbar sind.

7. Messaufnehmer nach Anspruch 1, bei dem - das Messaufnehmergehäuse (33) einen Hohlzylinder (41) aufweist, -- an den auf einander gegenüberliegenden Seiten ein Einlass (43) und ein Auslass (45) für das Medium angeformt ist, - das Messrohr (1) im Hohlzylinder (41) derart angeordnet ist, dass es senkrecht zur einer Längsachse des Hohlzylinders (41) verläuft und den Einlass (43) mit dem Auslass (45) verbindet, und - jedes Ende des Messrohrs (1) mittels einer hermetisch dichten Verbindung, insb. einer Kunststoffschweißung oder einer Klebung, hermetisch dicht mit dem Hohlzylinder (41) verbunden ist, und - der Innenraum (35) des Messaufnehmergehäuses (33) durch die hermetisch dichte Verbindung gegenüber den Innenräumen des Messrohrs (1), des Einlasses (43) und des Auslasses (45) abgeschlossen ist.

8. Messaufnehmer nach Anspruch 7, bei dem das Messaufnehmergehäuse (33) zwei im wesentlichen kreisscheibenförmige Deckel (49) aufweist, die endseitig auf zwei einander gegenüberliegende ringförmige Stirnflächen des Hohlzylinders (41) mittels hermetisch dichter Verbindungen, insb. Kunststoff-Schweißungen oder Klebungen, aufgebracht sind.
